# EUROPEAN PATENT SPECIFICATION

(11) **EP 2 216 102 B1**
(45) Date of publication and mention of the grant of the patent: **23.12.2015**
(21) Application number: 10152039.3
(22) Date of filing: 29.01.2010
(51) Int. Cl.: B05C 11/10, B05C 5/04, B29C 65/52, D06H 5/00, B29C 65/00, B29C 65/48

(54) **Adhesive supplying device**
Klebstoffversorgungsvorrichtung
Distributeur d'adhésif

(30) Priority: 04.02.2009 JP 2009023234
(43) Date of publication of application: 11.08.2010
(73) Proprietor: Brother Kogyo Kabushiki Kaisha, Nagoya-shi, Aichi 467-8561 (JP)
(72) Inventor: Yoshimoto, Naoki, Nagoya-shi Aichi 467-8562 (JP); Ohmura, Yoshikazu, Nagoya-shi Aichi 467-8562 (JP); Umeda, Kazutoshi, Nagoya-shi Aichi 467-8562 (JP); Yamaura, Hiroki, Nagoya-shi Aichi 467-8562 (JP); Iwakoshi, Hiroyasu, Nagoya-shi Aichi 467-8562 (JP)
(74) Representative: Feldmeier, Jürgen

(56) References cited:
- WO-A1-2007/046993
- WO-A2-93/05212
- AU-B2- 514 078
- FR-A5- 2 221 970
- JP-A- 62 102 856
- US-A- 5 046 666
- US-A1- 2004 084 549
- US-A1- 2006 182 887

## Description

### BACKGROUND

The present invention relates to an adhesive supplying device. More specifically, the present invention relates to an adhesive supplying device that pressurizes and supplies an adhesive to a nozzle.

An adhesive supplying device pressurizes and supplies an adhesive to a nozzle. The adhesive supplied by the adhesive supplying device is discharged from the nozzle. For example, a cloth bonding apparatus employs the adhesive supplying device. The cloth bonding apparatus is equipped with a driving source. A worker may connect the adhesive supplying device to the driving source. The cloth bonding apparatus drives the adhesive supplying device at an appropriate time. As a result, the adhesive supplying device causes a desired amount of the adhesive to be discharged from the nozzle so that the adhesive may adhere to a cloth easily.

The adhesive supplying device may encounter various troubles. For example, an adhesive usually contains an impurity. Therefore, the adhesive supplying device may be clogged due to the impurity. It may be desirable that the adhesive supplying device can be removed easily from the cloth bonding apparatus. It is because the worker may be able to clean or replace its components easily. EP 0 220 529 A proposes an adhesive supplying device. In the adhesive supplying device described in the publication, an inflow of the adhesive from a storage tank is blocked off by a valve, thus avoiding the adhesive from being wasted. After the inflow of the adhesive is blocked off, the worker may remove the adhesive supplying device and replace or clean its components.

The aforementioned adhesive supplying device includes a lot of components which are fixed in a complicated manner. Accordingly, the worker may have to go through a variety of complicated processes in order to remove and disassemble the adhesive supplying device when cleaning the inside and replace the components. Similarly, when assembling the adhesive supplying device, the worker may have to go through complicated processes. These processes may deteriorate working efficiency.

US 5,046,666 A discloses an adhesive supplying device according to the preamble of claim 1. Similar devices are known from FR 2 221 970 A5 and US 2004/084549 A1. Another device is known from AU 47 057 79 B.

It is an object of the present invention to provide an adhesive supplying device that may be removed and disassembled easily by a worker through simple processes.

This object is achieved by the adhesive supplying device having the features of claim 1. The present invention is further developed as defined in the dependent claims.

In the adhesive supplying device, the second unit has functions of forming the pump chamber and providing the channel for the adhesive. Therefore, the adhesive supplying device can be configured with a smaller number of components than a conventional adhesive supplying device. The worker can easily expose the pump mechanism portion by only removing the second unit from the first unit. Therefore, the worker can easily clean the inside and replace the components of the adhesive supplying device.

In the adhesive supplying device, a direction in which the first unit is connectable to the driving source support portion may be the same as a direction in which the second unit is connectable to the first unit.

In such a case, the worker can remove the first unit from the driving source support portion in the same direction as that in which the worker removes the second unit from the first unit. The worker can connect the first unit to the driving source support portion in the same direction as that in which the worker connects the second unit to the first unit. Therefore, the device can be removed and assembled easily, thus improving the working efficiency of the worker.

In the adhesive supplying device, the first unit includes a connecting structure to be connected to the driving source support portion, the connecting structure is provided at a position where the connecting structure is not covered by the second unit in a condition where the second unit is connected to the first unit, and the first unit is connectable to and detachable from the driving source support portion in a condition where the second unit is connected to the first unit.

In such a case, the worker can remove the first unit from the driving source support portion in a condition where the second unit is connected to the first unit. In other words, when removing the first unit from the driving source support portion, the worker need not remove the second unit from the first unit. Therefore, the adhesive supplying device can improve the working efficiency of the worker.

In such a case, the pump mechanism portion is a gear pump that includes the drive gear and the driven gear. The gear pump can discharge a viscous adhesive from the nozzle with high accuracy. Therefore, the worker can clean or replace the gear pump appropriately and easily by removing the second unit from the first unit.

In the adhesive supplying device, the second unit may include a heating device adapted to heat the adhesive.

In such a case, the second unit has all of the function of forming the pump chamber, the channel for the adhesive, and the heating device. Accordingly, the adhesive supplying device can supply a so-called a hot-melt adhesive to the nozzle with a simple construction without increasing the number of components. The worker can clean or replace the pump mechanism portion without removing the heating device.

In the adhesive supplying device, the second unit may include the nozzle that connects to the channel.

In such case, the worker can clean or replace the pump mechanism portion without removing the nozzle.

### BRIEF DESCRIPTION OF THE DRAWINGS

Exemplary embodiments of the present disclosure will be described below in detail with reference to the accompanying drawings in which:
Fig. 1 is an upper front perspective view of a cloth bonding machine 1;
Fig. 2 is an upper front perspective view of an inner configuration of the cloth bonding machine 1;
Fig. 3 is a horizontal sectional view of a first unit 32 and an connecting portion 34 in an adhesive supplying device 31 seen from the above of the cloth bonding machine 1;
Fig. 4 is a vertical sectional view of the adhesive supplying device 31 seen from the front of the cloth bonding machine 1 (in an arrow A direction in Fig. 1);
Fig. 5 is an exploded perspective view of the first unit 32 and a second unit 33;
Fig. 6 is a left side view of the first unit 32 and the connecting portion 34; and
Fig. 7 is an exploded perspective view showing a connecting structure of the adhesive supplying device 31.

### DESCRIPTION OF THE PREFERRED EMBODIMENTS

An adhesive supplying device 31 according to the present invention and a cloth bonding machine 1 equipped with the adhesive supplying device 31 will be described below with reference to the drawings.

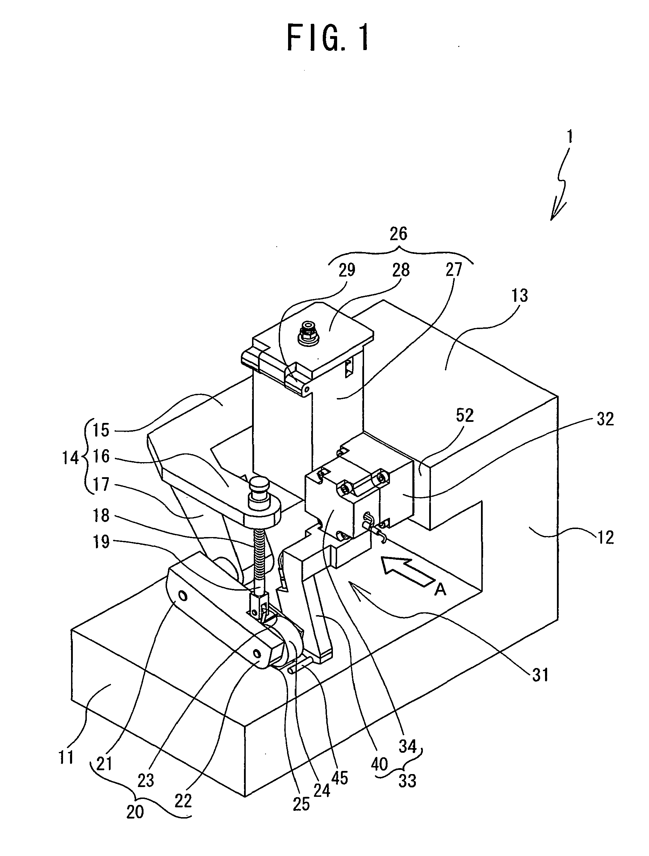

A configuration of a cloth bonding machine 1 will be described with reference to Fig. 1. It is defined that the upper side, lower side, lower right side, upper left side, upper right side, and lower left side of Fig. 1 are the upper side, lower side, front side, rear side, right side, and left side of the cloth bonding machine 1, respectively.

As shown in Fig. 1, the cloth bonding machine 1 includes a bed portion 11, a pillar portion 12, and an arm portion 13. The bed portion 11 has a substantially rectangular parallelepiped shape with the right-and-left direction as the longitudinal direction. The bed portion 11 is fixed on a table (not shown). The pillar portion 12 extends vertically upward from the right end of the bed portion 11. The arm portion 13 is connected to the upper end of the pillar portion 12 and extends leftward from the left side of the pillar portion 12.

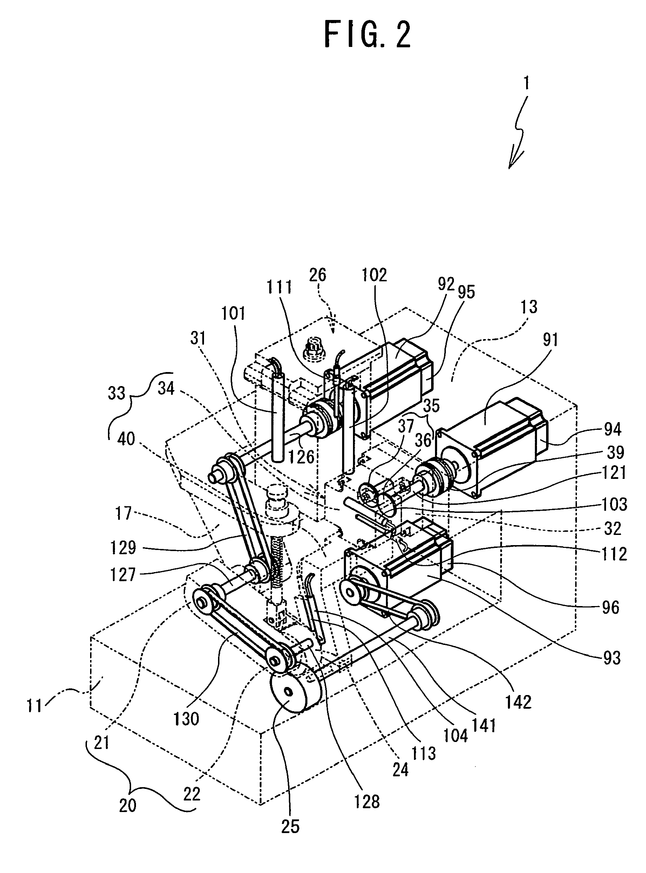

The bed portion 11 includes therein a lower feed roller 25 (see Fig. 2), a third motor 93 (see Fig. 2), and the like. The lower feed roller 25 presses and feeds cloths in conjunction with an upper feed roller 24, which will be described later. The third motor 93 drives the lower feed roller 25. The bed portion 11 functions as a base that supports the pillar portion 12. The pillar portion 12 supports the arm portion 13. As shown in Fig. 1, the left end portion of the arm portion 13 supports a beam portion 14, a storage chamber 26, and the adhesive supplying device 31 in this order from the rear. The arm portion 13 includes therein a first motor 91 (see Fig. 2), a second motor 92 (see Fig. 2), and the like. The first motor 91 drives gears 35, which will be described later. The second motor 92 drives the upper feed roller 24.

The beam portion 14 and a roller holding portion 20 connected to the beam portion 14 will be described below. As shown in Fig. 1, the beam portion 14 includes a body portion 15, a spring support portion 16, and a column portion 17. The body portion 15 is a member that extends horizontally leftward from the rear left end of the arm portion 13. The length of the body portion 15 in the right-and-left direction is about one third of the length of the bed portion 11 in the right-and-left direction. The spring support portion 16 has a plate shape. The spring support portion 16 extends horizontally forward from the left end portion of the body portion 15. The length of the spring support portion 16 in the back-and-forth direction is about half the length of the bed portion 11 in the back-and-forth direction. The column portion 17 extends obliquely downward from the body portion 15 at about 45 degrees relative to the horizontal plane. There is a gap between the lower end of the column portion 17 and the bed portion 11.

The spring support portion 16 has a hole at the front end portion. The spring support portion 16 supports a shaft portion 19 that is inserted through the hole in a vertically movable manner. The shaft portion 19 is inserted through the spring 18. The column portion 17 has a shaft portion extending horizontally leftward from the lower end part thereof. The shaft portion supports a rear end portion 21 of the roller holding portion 20. The roller holding portion 20 may swing a front end portion 22 in the vertical direction with the shaft portion as the center of swing.

The front end portion 22 of the roller holding portion 20 rotatably supports the upper feed roller 24. The upper feed roller 24 has a cylindrical shape. The upper feed roller 24 is positioned near and at the back of a nozzle 45. The nozzle 45 projects leftward from a support portion 40. The roller holding portion 20 has a shaft support portion 23 on the upper face slightly forward from the center. The shaft support portion 23 supports the lower end of the shaft portion 19. The spring 18 is interposed between the spring support portion 16 and the bottom portion of the shaft portion 19. The spring 18 urges the shaft portion 19 downward thereby urging the roller holding portion 20 connected to the shaft portion 19 downward.

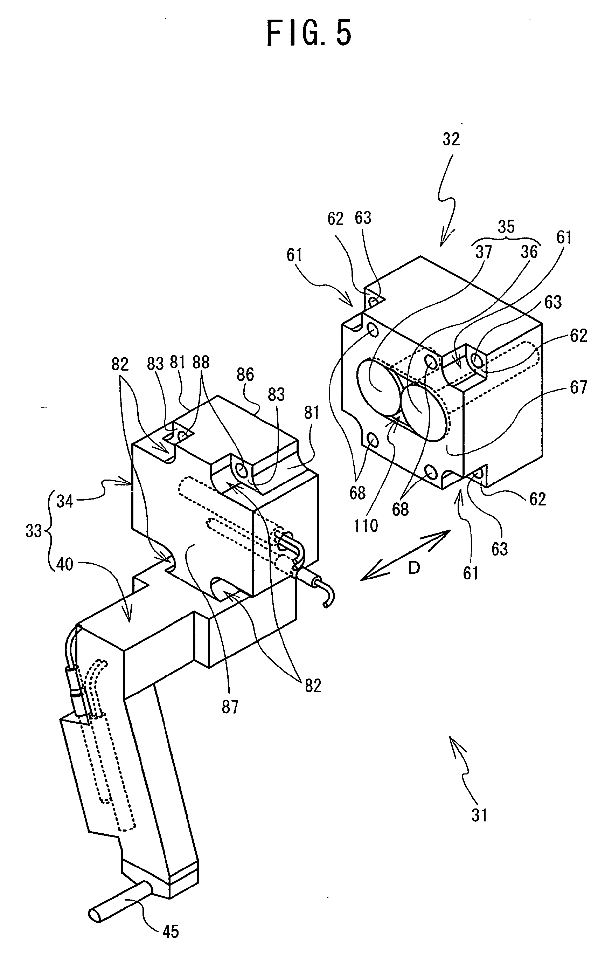

The storage chamber 26 will be described below. The storage chamber 26 has a substantially rectangular parallelepiped shape with the vertical direction as the longitudinal direction. The storage chamber 26 extends upward at the rear of the adhesive supplying device 31 on the left side of the arm portion 13. The storage chamber 26 includes a body portion 27, a cover portion 28, and a cover shaft portion 29. The body portion 27 has a bottomed tube shape having an opening at the top. The cover portion 28 covers the opening at the top of the body portion 27. The body portion 27 has the cover shaft portion 29 at its upper end. The cover shaft portion 29 supports the cover portion 28 in an openable/closable manner. The storage chamber 26 stores the adhesive in the body portion 27. The stored adhesive may be supplied from the storage chamber 26 to the gears 35 (see Figs. 2 and 5) and to the nozzle 45 as needed.

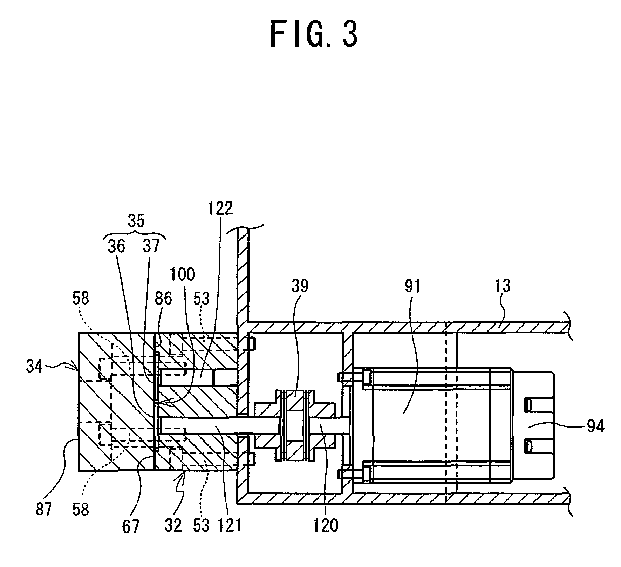

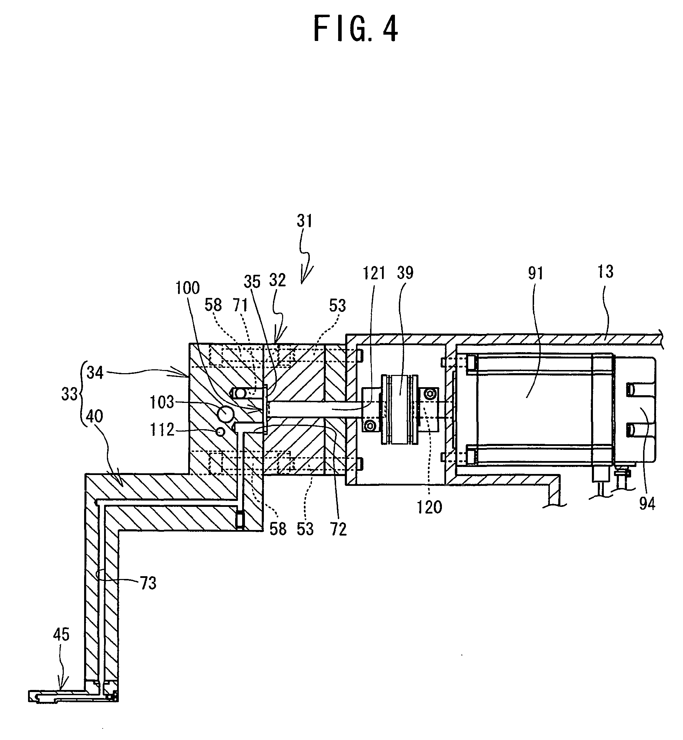

The adhesive supplying device 31 will be described below. The adhesive supplying device 31 includes a gear pump which includes a drive gear 36 and a driven gear (idler gear) 37 (seer Figs. 2 and 5). The adhesive supplying device 31 includes the first unit 32 and the second unit 33. The first unit 32 and the second unit 33 are detachably connected with each other. The first unit 32 is a substantially cubic member. The first unit 32 can be connected to a left side face 52 of the arm portion 13. The first unit 32 has a concave portion 110 that opens in a left side face 67 (see Fig. 5). The first unit 32 has the gears 35 (see Figs. 2 and 5) in the concave portion 110. The gears 35 are a pump mechanism portion that supplies an appropriate amount of the adhesive to the nozzle 45 with high accuracy. The second unit 33 includes a substantially cubic connecting portion 34 and a support portion 40. The connecting portion 34 is a portion that can be connected to the first unit 32. The support portion 40 is a portion that supports the nozzle 45. The connecting portion 34 may be connected to the left side face of the first unit 32 to cover the concave portion 110 and the gears 35. The first unit 32 and the connecting portion 34 together form a pump chamber 100 (see Figs. 3 and 4). The pump chamber 100 houses the gears 35. The gears 35 supply the adhesive to the nozzle 45 in a pressurized manner.

The vertical length of the first unit 32 is roughly the same as the vertical length of the arm portion 13. The position of the second unit 33 in the right-and-left direction is roughly the same as the center position of the bed portion 11 in the right-and-left direction. The connecting portion 34 includes a first channel 71 (see Fig. 4) and a second channel 72 (see Fig. 4), which will be described later. The first channel 71 leads the adhesive from the storage chamber 26 to the gears 35. The second channel 72 leads the adhesive pressurized and fed by the gears 35 to the support portion 40.

The support portion 40 is a member having an inverted L-shape. The support portion 40 extends leftward from the lower end of the connecting portion 34 and then bends forward and obliquely downward. There is a small gap between the lower end of the support portion 40 and the bed portion 11. The nozzle 45 projects leftward from the lower end portion of the support portion 40. The nozzle 45 is cylindrical. The nozzle 45 has a discharge port from which the adhesive is discharged. The discharge port opposes the bed portion 11. A worker may insert the nozzle 45 between two layers of oppositely arranged cloths when bonding the cloths. The gears 35 supply the adhesive to the nozzle 45 through a third channel 73 (see Fig. 4) provided in the support portion 40. From the discharge port of the nozzle 45, the adhesive is discharged onto the cloth. As a result, the adhesive may be applied on the surface of the lower cloth positioned below the nozzle 45. The structures of the first unit 32, the second unit 33, and the gears 35 will be described in detail later.

An inner configuration of the cloth bonding machine 1 will be described with reference to Fig. 2. As shown in Fig. 2, the cloth bonding machine 1 includes therein the first motor 91, the second motor 92, the third motor 93, and the like. The first motor 91 drives the gears 35. The second motor 92 drives the upper feed roller 24. The third motor 93 drives the lower feed roller 25.

The first motor 91 transmits a rotation drive force to the gears 35 via a rotary shaft 121 thereby driving gears 35. The gears 35 include the drive gear 36 and the driven gear (idler gear) 37. The drive gear 36 is fixed at the left end of the rotary shaft 121. Accordingly, the drive gear 36 rotates along with the rotary shaft 121. The driven gear 37 meshes with the drive gear 36. The first motor 91 is positioned inside the arm portion 13 and to the right side of a portion where the first unit 32 is connected to the arm portion 13. A rotary shaft 120 (see Fig. 3) of the first motor 91 is connected to a coupling 39. The rotary shaft 121 extends leftward from the coupling 39 inside the first unit 32. The drive gear 36 and the driven gear 37 supply an appropriate amount of the adhesive to the nozzle 45.

The second motor 92 transmits a rotation drive force to the upper feed roller 24 via rotary shafts 126, 127 and 128 and belts 129 and 130 thereby driving the upper feed roller 24. The second motor 92 is positioned inside the arm portion 13 and to the right side of a portion where the beam portion 14 (see Fig. 1) is connected to the arm portion 13. The rotary shaft 126 extends leftward from a rotary shaft of the second motor 92. The left end of the rotary shaft 126 is positioned inside the column portion 17. The left end of the rotary shaft 126 supports a pulley. The right end of the rotary shaft 127 is positioned inside the lower end of the column portion 17 and the left end of the rotary shaft 127 is positioned inside the rear end portion 21 of the roller holding portion 20. The right end and the left end of the rotary shaft 127 each support a pulley. The rotary shaft 128 is a rotary shaft of the upper feed roller 24. The left end of the rotary shaft 128 is positioned inside the front end portion 22 of the roller holding portion 20, and supports a pulley. The right end of the rotary shaft 128 projects from the front end portion 22 and supports the upper feed roller 24. The belt 129 is crossed between the pulley at the left end of the rotary shaft 126 and the pulley at the right end of the rotary shaft 127 inside the column portion 17. The belt 130 is crossed between the pulley at the left end of the rotary shaft 127 and the pulley at the left end of the rotary shaft 128 inside the roller holding portion 20. The upper feed roller 24 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and fixed to the rotary shaft 141. The lower feed roller 25 is positioned below the upper feed roller 24 and inside the bed portion 11. The rotary shaft 141 extends leftward from the front side of a rotary shaft of the third motor 93 inside the bed portion 11. The rotary shaft 141 is connected to the lower feed roller 25. The belt 142 is crossed between a pulley of the rotary shaft of the third motor 93 and a pulley at the right end of the rotary shaft 141 inside the bed portion 11. The lower feed roller 25 rotates along with the rotation of the third motor 93. The upper feed roller 24 and the lower feed roller 25 rotate to press cloths sandwiched therebetween and to feed the cloths from front to back.

A first encoder 94 is connected to the right end of the first motor 91. The first encoder 94 detects a rotation amount of the first motor 91. A second encoder 95 is connected to the right end of the second motor 92. The second encoder 95 detects a rotation amount of the second motor 92. A third encoder 96 is connected to the right end of the third motor 93. The third encoder 96 detects a rotation amount of the third motor 93.

The body position 27 (see Fig. 1) of the storage chamber 26 includes a first storage chamber heater 101, a second storage chamber heater 102, and a storage chamber temperature sensor 111 in its peripheral wall. The first storage chamber heater 101 and the second storage chamber heater 102 heat the storage chamber 26 to thereby heat the adhesive stored in the storage chamber 26. The storage chamber temperature sensor 111 detects the temperature of the storage chamber 26 to thereby measure the temperature of the adhesive stored in the storage chamber 26. The cloth bonding machine 1 uses the first storage chamber heater 101, the second storage chamber heater 102, and the storage chamber temperature sensor 111 to heat a hot-melt adhesive to a predetermined temperature in the storage chamber 26 to liquefy the adhesive.

The connecting portion 34 of the second unit 33 has a connecting portion heater 103 and an connecting portion temperature sensor 112 therein. The connecting portion heater 103 heats the connecting portion 34 to thereby heat the adhesive flowing in from the gears 35. The connecting portion temperature sensor 112 measures the temperature of the connecting portion 34.

The support portion 40 of the second unit 33 has a support portion heater 104 and a support portion temperature sensor 113 therein. The support portion heater 104 heats the support portion 40 to thereby heat the adhesive flowing from the connecting portion 34 into the nozzle 45. The support portion temperature sensor 113 measures the temperature of the support portion 40.

The encoders 94 to 96 are connected to a CPU in a control box, which is not shown. The CPU controls operations of the motors 91 to 93 based on signals received from the encoders 94 to 96, respectively. The temperature sensors 111 to 113 are also connected to the CPU. The CPU controls the heaters 101 to 104 based on signals received from the temperature sensors 111 to 113, respectively.

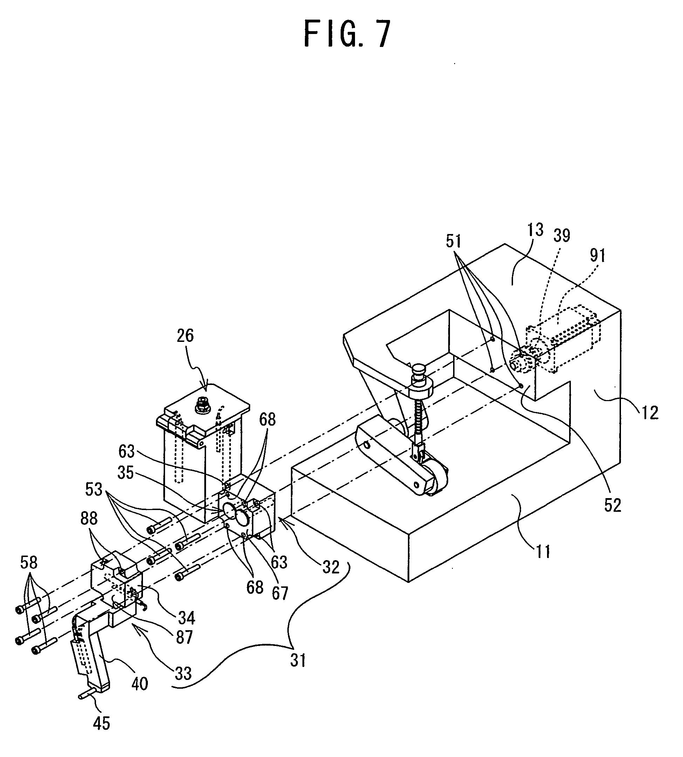

The configuration of the adhesive supplying device 31 will be described in detail with reference to Figs. 3 to 6. The upper side, lower side, lower right side, upper left side, upper right side, and lower left side of Figs. 5 and 7 are respectively defined as the upper side, lower side, front side, rear side, right side, and left side of the adhesive supplying device 31.

An inner configuration of the adhesive supplying device 31 will be described in detail below. As shown in Fig. 3, the rotary shaft 120 of the first motor 91 couples to the right side of the coupling 39. The right end of the rotary shaft 121 couples to the left side of the coupling 39. The drive gear 36 is fixed to the left end of the rotary shaft 121. The rotary shaft 121 functions as a rotary shaft of the drive gear 36. The driven gear 37 meshes with the drive gear 36. The driven gear 37 rotates along with the drive gear 36 around the rotary shaft 122. The first unit 32 rotationally supports the rotary shaft 122. The first unit 32 is fixed to the arm portion 13 with first screws 53. The connecting portion 34 is fixed to the first unit 32 with second screws 58.

As shown in Figs. 3 and 4, when the connecting portion 34 of the second unit 33 is connected to the first unit 32, the connecting portion 34 covers the gears 35 that have been exposed on the left side of the first unit 32. As described above, the gears 35 are positioned in the concave portion 110 (see Fig. 5) that opens in the left side face 67 of the first unit 32. The concave portion 110 in the left side face 67 of the first unit 32 and a right side face 86 of the connecting portion 34 are combined to form the pump chamber 100 that houses the gears 35.

As shown in Fig. 4, the connecting portion 34 includes the first channel 71 and the second channel 72 therein. The first channel 71 leads the adhesive from the storage chamber 26 (see Fig. 1) to the gears 35 (pump chamber 100). The second channel 72 leads the adhesive pressurized and fed by the gears 35 to the support portion 40. The support portion 40 includes the third channel 73 therein. The third channel 73 leads the adhesive flowing from the second channel 72 into the nozzle 45.

An adhesive supplying port (not shown) is provided at the lower portion of the storage chamber 26 (see Fig. 1). The first channel 71 is connected to the adhesive supplying port. The first channel 71 extends from the adhesive supplying port to the front (from the front face of Fig. 4 toward a viewer). The first channel 71 extends toward the front, bends rightward (to the right side of Fig. 4) at the center of the connecting portion 34 of the second unit 33, and connects to the pump chamber 100. The first channel 71 connects to the pump chamber 100 at a position above where the drive gear 36 and the driven gear 37 (see Fig. 3) intermesh with each other. The first motor 91 rotates the drive gear 36 and the driven gear 37. The drive gear 36 and the driven gear 37 apply pressure to the adhesive that has flowed in through the first channel 71 and supply the adhesive into the second channel 72.

The second channel 72 connects from the pump chamber 100 at a position below where the drive gear 36 and the driven gear 37 intermesh with each other. The second channel 72 extends leftward (to the left side of Fig. 4) from the pump chamber 100 and bends downward. The second channel 72 leads to the upper end portion of the support portion 40, and connects to the third channel 73 inside the support portion 40. The connecting portion 34 includes the connecting portion heater 103 and the connecting portion temperature sensor 112. The cloth bonding machine 1 uses the connecting portion heater 103 and the connecting portion temperature sensor 112 to keep the temperature of the adhesive within a predetermined range. Thus, the cloth bonding machine 1 may maintain fluidity of the adhesive. As a result, the cloth bonding machine 1 may stably lead the adhesive from the storage chamber 26 to the support portion 40.

The third channel 73 extends downward from the upper right end portion of the support portion 40. The third channel 73 thus extending downward then bends and extends leftward in the support portion 40. The third channel 73 thus extending leftward then bends at the left end portion of the support portion 40 and extends downward. The third channel 73 thus extending downwards then connects to the nozzle 45 fixed to the lower end portion of the support portion 40. As described above, the support portion 40 includes the support heater 104 and the support portion temperature sensor 113 (see Fig. 2) therein. The cloth bonding machine 1 leads the adhesive from the connecting portion 34 to the nozzle 45 in a condition where the temperature of the adhesive is kept within a predetermined temperature range by using the support heater 104 and the support portion temperature sensor 113.

A connecting structure of the adhesive supplying device 31 will be described below. As shown in Fig. 5, the substantially cubic first unit 32 has first recesses 61 at the four corners on the left side (lower left side of Fig. 5). The first recesses 61 each have a surface 62 which is substantially parallel to the left side face 67 of the first unit 32. The surfaces 62 each have a hole 63. Each of the holes 63 goes through the first unit 32 rightward from the surface 62. The left side face 67 of the first unit 32 has screw holes 68 at four positions.

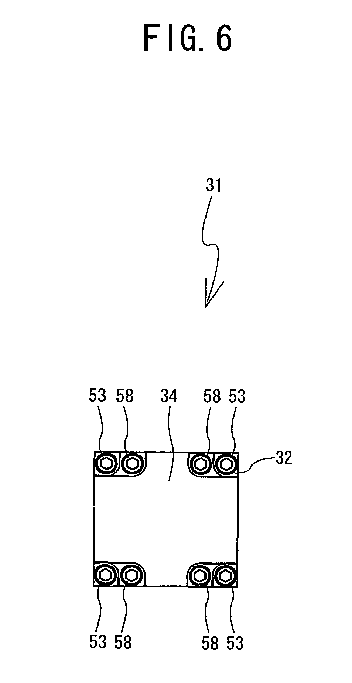

The substantially cubic connecting portion 34 have a width (baclc-and-forth directional length) and a height that are the same as those of the first unit 32. The connecting portion 34 has rounded grooves 81 at the four corners. Each of the grooves 81 extends in the right-and-left direction (in an arrow D direction in Fig. 5). Each of the grooves 81 is formed by cutting the edge of the corner in a rounded manner such that the shape of the groove 81 matches the shape of the first recess 61 in the first unit 32. The worker can easily position the first unit 32 and the connecting portion 34 with each other by aligning the first recesses 61 and the grooves 81 with each other. The worker can easily insert the first screw 53 into the hole 63 (see Fig. 5) along the first recess 61 and the groove 81, and fix the first unit 32 to the arm portion 13 with the first screw 53. As shown in Fig. 6, even in a condition where the connecting portion 34 is connected to the first unit 32, heads of the first screws 53 are exposed to the direction from which the first screws 53 are inserted. In other words, even in the condition where the connecting portion 34 is connected to the first unit 32, the connecting portion 34 will not cover the holes 63 formed in the respective surfaces 62 of the first unit 32. Therefore, the worker can remove the first screws 53 to remove the first unit 32 with the connecting portion 34 connected thereto, from the arm portion 13. Conversely, the worker can insert the first screws 53 into the respective holes 63 to fix the first unit 32 with the connecting portion, 34 connected thereto, to the arm portion 13.

As shown in Fig. 5, the connecting portion 34 has second recesses 82. Each of the second recess 82 is formed by further cutting the left end portion of each of the grooves 81. The second recesses 82 each have a surface 83 which is substantially parallel to a left side face 87 of the connecting portion 34. The surfaces 83 each have a hole 88. Each of the holes 88 goes through the connecting portion 34 rightward from the surface 83.

As shown in Fig. 7, the left side face 52 of the arm portion 13 has four screw holes 51. The screw holes 51 are positioned at the left side of the first motor 91. The worker may place the first unit 32 with the storage chamber 26 fixed thereto at a connecting position of the arm portion 13. As a result, the positions of the four screw holes 51 in the arm portion 13 are respectively matched with the positions of the holes 63 in the first unit 32. In a condition where the positions are matched, the worker may insert the first screws 53 into the respective holes 63 and the screw holes 51, and fasten the first screws 53. Consequently, the first unit 32 can be connected to the arm portion 13. Simultaneously, the rotary shaft 121 can be coupled to the coupling 39 (see Figs. 3 and 4).

The worker may place the connecting portion 34 to a connecting position on the left side of the first unit 32. As a result, the positions of the four screw holes 68 in the left side face 67 of the first unit 32 are respectively matched with the positions of the four holes 88 in the connecting portion 34. In a condition where the positions are matched, the worker may insert the second screws 58 into the respective holes 88 and the screw holes 68, and fasten the second screws 58. Consequently, the connecting portion 34 can be connected to the first unit 32.

As described above, the adhesive supplying device 31 in the present embodiment includes the first unit 32 and the second unit 33. The first unit 32 includes the gears 35. The gears 35 are the pump mechanism portion. The first unit 32 is detachably connected to the arm portion 13. As a result, the gears 35 are connected to the first motor 91. The second unit 33 has the first channel 71, the second channel 72, and the third channel 73, which are channels to lead the adhesive. The second unit 33 is detachably connected to the first unit 32. When the second unit 33 is connected to the first unit 32, the second unit 33 forms the pump chamber 100 together with the first unit 32. The pump chamber 100 houses the gears 35. In other words, the second unit 33 forms the pump chamber 100 and also includes the channels for the adhesive. The configuration of the second unit 33 may decrease the number of components of the adhesive supplying device 31. The worker may expose the gears 35 only by removing the second unit 33 from the first unit 32. Therefore, the worker can easily clean the inside and replace the components of the adhesive supplying device 31.

In the adhesive supplying device 31, the direction in which the first unit 32 is connected to the arm portion 13 is the same as the direction in which the connecting portion 34 is connected to the first unit 32. Therefore, the worker can connect the first unit 32 to the arm portion 13 and connect the connecting portion 34 to the first unit 32 from the same direction. In other words, the adhesive supplying device 31 may enable easy removal and assembly of the components, thus improving the working efficiency of the worker. Even in a condition where the connecting portion 34 is connected to the first unit 32, the connecting portion 34 will not cover the holes 63 formed in the respective surfaces 62 of the first unit 32. Therefore, in a condition where the first unit 32 is connected to the arm portion 13, the heads of the first screws 53 inserted into the respective holes 63 are exposed. Consequently, the worker can detach only the connecting portion 34 from the first unit 32. In addition, by removing the exposed first screws 53, the worker can also detach the first unit 32 with the connecting portion 34 attached thereto, from the arm portion 13. Therefore, the working efficiency of the worker can further be improved.

The adhesive supplying device 31 includes the first channel 71, the second channel 72, and the third channels 73 all in the second unit 33. The first channel 71, the second channel 72, and the third channels 73 are channels for leading the adhesive from the storage chamber 26 to the nozzle 45. If any of the channels is clogged, the worker may only need to clean or replace the second unit 33. If a trouble occurs due to a clogging or damage in the gears 35, the worker may only need to clean or replace the first unit 32. Therefore, the efficiency of the worker in cleaning or replacing the components may be improved. Even in a case where the worker needs to replace the components of the adhesive supplying device 31, the number of the components to be replaced can be reduced to a minimum.

Since the adhesive supplying device 31 is a gear pump including the drive gear 36 and the driven gear 37, the adhesive supplying device 31 can discharge a viscous adhesive from the nozzle 45 with high accuracy. The worker can clean or replace the gear pump appropriately and easily by detaching the connecting portion 34 from the first unit 32. The second unit 33 includes the connecting portion heater 103 and the support portion heater 104 to heat the adhesive. In other words, the second unit 33 has all of the functions of forming the pump chamber 100, providing the channels for the adhesive, and heating the adhesive. Accordingly, the adhesive supplying device 31 can supply a hot-melt adhesive to the nozzle 45 with a simple configuration without increasing the number of the components. If a mechanism for heating the adhesive is separately provided, the worker may need to carry out a process to remove the mechanism for heating the adhesive. In the adhesive supplying device 31, the worker can clean or replace the gears 35 without separately removing the mechanism for heating the adhesive. Since the second unit 33 includes the nozzle 45, the worker can clean or replace the gears 35 without separately removing the nozzle 45.

In the above-described embodiment, the gears 35 correspond to a pump mechanism portion of the present invention. The first motor 91 corresponds to a driving source. The arm portion 13 corresponds to a driving source support portion. The second channel 72 and the third channel 73 correspond to a channel. The holes 63 and the first screws 53 correspond to a connecting structure of the present invention. The connecting portion heater 103 and the support portion heater 104 correspond to a heating device of the present invention.

The configurations of the above-described embodiment are exemplary and, of course, various modifications may be made thereto.

In the above-described embodiment, as shown in Fig. 5, the first unit 32 has the concave portion 110 in the left side face 67. The gears 35 are positioned in the concave position 110. The concave portion 110 in the first unit 32 and the right side face (plane) 86 of the connecting portion 34 together form the pump chamber 100 (see Fig. 3). The configuration of the pump chamber 100, however, may be changed. For example, the left side face 67 of the first unit 32 may be planar and, instead, the right side face 86 of the connecting position 34 may have a concave portion. The first unit 32 and the connecting portion 34 may respectively have a concave portion in the left side face 67 and the right side face 86. In the above-described embodiment, the gears 35 are provided in the first unit 32 so that the worker can easily clean or replace the components of the gears 35 and the channels 71 to 73. However, the gears 35 may be provided in the second unit 33.

The connecting portion 34 and the support portion 40 of the second unit 33 may be configured as separable portions. The connecting portion 34 may be configured to rotatably support the support portion 40. The second unit 33 may include only the connecting portion 34, without including the support position 40. In a case where the second unit 33 includes only the connecting portion 34, the connecting portion 34 corresponds to the second unit of the present invention. The nozzle 45 need not be formed integrally with the support portion 40 but may be detachable from the support portion 40.

In the above-described embodiment, the arm portion 13 and the first unit 32, as well as the first unit 32 and the second unit 33, can be connected to each other with screws and screw holes. The connecting method is not limited to the method by use of the screws and the screw holes. For example, bolts and nuts may be used to connect the arm portion 13 and the first unit 32 to each other, and the first unit 32 and the second unit 33 to each other. The connecting method of the arm portion 13 and the first unit 32 may be different from the connecting method of the first unit 32 and the second unit 33.

It may be preferable that the direction in which the first unit 32 is connected to the arm portion 13 is the same as the direction in which the second unit 33 is connected to the first unit 32. However, those directions may be different from each other. For example, the first unit 32 may include an attachment plate. The attachment plate may have a screw hole that extends in the vertical direction. The worker may insert the attachment plate into the arm portion 13. In a condition where the attachment plate is inserted into the arm portion 13, the worker may fasten screws in the vertical direction of the arm portion 13. In this example, the worker may also be able to clean or replace the gears 35 easily by detaching only the second unit 33 from the first unit 32.

## Claims

1. An adhesive supplying device (31) that is adapted to pressurize and supply an adhesive to a nozzle (45) from which the adhesive is dischargeable, the device (31) comprising:
a driving source support portion (13);
a driving source (91) supported by the driving source support portion (13);
a pump mechanism portion (35) driven by power of the driving source (91), and that is adapted to pressurize the adhesive;
a pump chamber (100) that houses the pump mechanism portion (35);
a first unit (32) that includes the pump mechanism portion (35) and that is adapted to connect the pump mechanism portion (35) to the driving source (91) by being detachably connected to the driving source support portion (13); and
a second unit (33) that includes at least a channel (72, 73) adapted to lead the adhesive pressurized by the pump mechanism portion (35); wherein
the first unit (32) includes a first connecting structure (63, 53) to be connected to the driving source support portion (13), and the second unit (33) includes a second connecting structure (68, 58) to be connected to the first unit (32); wherein:
the first connecting structure (63, 53) is provided at a position where the first connecting structure (63, 53) is not covered by the second unit (33) in a condition where the second unit (33) is connected to the first unit (32) so that the first unit (32) is connectable to and detachable from the driving source support portion (13) without removing the second unit (33) from the first unit (32) in a condition where the second unit (33) is connected to the first unit (32),
**characterized in that**
the pump mechanism portion (35) is a gear pump including:
a drive gear (36) that rotates when connected to a motor (91), which is the driving source (91); and
a driven gear (37) that meshes and rotates with the drive gear (36);
the second unit (33) forms the pump chamber (100) together with the first unit (32) by being detachably connected to the first unit (32); and
the gear pump can be exposed for cleaning or replacement by removing only the second unit (33) from the first unit (32).

2. The adhesive supplying device (31) of claim 1, wherein a direction in which the first unit (32) is connectable to the driving source support portion (13) is the same as a direction in which the second unit (33) is connectable to the first unit (32).

3. The adhesive supplying device (31) of claim 1 or 2, wherein the second unit (33) includes a heating device (103, 104) adapted to heat the adhesive.

4. The adhesive supplying device (31) of any one of claims 1 through 3, wherein the second unit (33) includes the nozzle (45) that connects to the channel (72, 73).

## Patentansprüche

1. Klebemittelzuführungsvorrichtung (31), die daran angepasst ist, ein Klebemittel mit Druck zu beaufschlagen und zu einer Düse (45) zuzuführen, aus der das Klebemittel ausgelassen werden kann, wobei die Vorrichtung (31) Folgendes aufweist:
einen Antriebsquellenstützabschnitt (13);
eine Antriebsquelle (91), die durch den Antriebsquellenstützabschnitt (13) gestützt ist;
einen Pumpenmechanismusabschnitt (35), der durch eine Leistung der Antriebsquelle (91) angetrieben wird und daran angepasst ist, das Klebemittel mit Druck zu beaufschlagen;
eine Pumpenkammer (100), die den Pumpenmechanismusabschnitt (35) unterbringt;
eine erste Einheit (32), die den Pumpenmechanismusabschnitt (35) aufweist und daran angepasst ist, den Pumpenmechanismusabschnitt (35) mit der Antriebsquelle (91) zu verbinden, indem sie lösbar mit dem Antriebsquellenstützabschnitt (13) verbunden ist; und
eine zweite Einheit (33), die zumindest einen Kanal (72, 73) aufweist, der daran angepasst ist, das durch den Pumpenmechanismusabschnitt (35) mit Druck beaufschlagte Klebemittel zu leiten; wobei
die erste Einheit (32) eine erste Verbindungsstruktur (63, 53) aufweist, die mit dem Antriebsquellenstützabschnitt (13) zu verbinden ist, und die zweite Einheit (33) eine zweite Verbindungsstruktur (68, 58) aufweist, die mit der ersten Einheit (32) zu verbinden ist; wobei:
die erste Verbindungsstruktur (63, 53) an einer Position vorgesehen ist, an der die erste Verbindungsstruktur (63, 53) durch die zweite Einheit (33) in einem Zustand nicht abgedeckt ist, in dem die zweite Einheit (33) mit der ersten Einheit (32) verbunden ist, so dass die erste Einheit (32) mit dem Antriebsquellenstützabschnitt (13) verbunden und von diesem gelöst werden kann, ohne dass die zweite Einheit (33) von der ersten Einheit (32) in einem Zustand entfernt wird, in dem die zweite Einheit (33) mit der ersten Einheit (32) verbunden ist, **dadurch gekennzeichnet, dass**
der Pumpenmechanismusabschnitt (35) eine Zahnradpumpe ist und Folgendes aufweist:
ein Antriebszahnrad (36), das sich dreht, wenn es mit einem Motor (91) verbunden ist, der die Antriebsquelle (91) ist; und
ein angetriebenes Zahnrad (37), das das Antriebszahnrad (36) kämmt und sich mit diesem dreht;
wobei die zweite Einheit (33) die Pumpenkammer (100) zusammen mit der ersten Einheit (32) bildet, indem sie lösbar mit der ersten Einheit (32) verbunden ist; und
die Zahnradpumpe für eine Reinigung oder einen Austausch freigelegt werden kann, indem nur die zweite Einheit (33) von der ersten Einheit (32) entfernt wird.

2. Klebemittelzuführungsvorrichtung (31) gemäß Anspruch 1, wobei eine Richtung, in der die erste Einheit (32) mit dem Antriebsquellenstützabschnitt (13) verbunden werden kann, gleich einer Richtung ist, in der die zweite Einheit (33) mit der ersten Einheit (32) verbunden werden kann.

3. Klebemittelzuführungsvorrichtung (31) gemäß Anspruch 1 oder 2,
wobei die zweite Einheit (33) eine Heizvorrichtung (103, 104) aufweist, die daran angepasst ist, das Klebemittel zu heizen.

4. Klebemittelzuführungsvorrichtung (31) gemäß einem der Ansprüche 1 bis 3, wobei die zweite Einheit (33) die Düse (45) aufweist, die mit dem Kanal (72, 73) verbunden ist.

## Revendications

1. Dispositif d'alimentation en adhésif (31) qui est adapté afin de pressuriser et de délivrer un adhésif à un injecteur (45) à partir duquel l'adhésif peut être déchargé, le dispositif (31) comprenant :
une partie de support de source d'entraînement (13) ;
une source d'entraînement (91) supportée par la partie de support de source d'entraînement (13) ;
une partie de mécanisme de pompage (35) entraînée par de l'énergie de la source d'entraînement (91) et qui est adaptée afin de pressuriser l'adhésif ;
une chambre de pompe (100) qui contient la partie de mécanisme de pompage (35) ;
une première unité (32) qui comprend la partie de mécanisme de pompage (35) et qui est adaptée pour raccorder la partie de mécanisme de pompage (35) à la source d'entraînement (91) en étant raccordée de manière amovible à la partie de support de source d'entraînement (13) ; et
une seconde unité (33) qui comporte au moins un canal (72, 73) adapté afin d'acheminer l'adhésif pressurisé par la partie de mécanisme de pompage (35) ; dans lequel
la première unité (32) comporte une première structure de liaison (63, 53) destinée à être raccordée à la partie de support de source d'entraînement (13) et la seconde unité (33) comporte une seconde structure de liaison (68, 58) destinée à être raccordée à la première unité (32) ; dans lequel :
la première structure de liaison (63, 53) est agencée à un emplacement où la première structure de liaison (63, 53) n'est pas recouverte par la seconde unité (33) dans un état dans lequel la seconde unité (33) est raccordée à la première unité (32) de telle sorte que la première unité (32) peut être raccordée à la partie de support de source d'entraînement (13) et séparée de cette dernière sans retirer la seconde unité (33) de la première unité (32) dans un état dans lequel la seconde unité (33) est raccordée à la première unité (32),
**caractérisé en ce que**
la partie de mécanisme de pompage (35) est une pompe à engrenages comportant :
un engrenage d'entraînement (36) qui tourne lorsqu'il est couplé à un moteur (91), qui est la source d'entraînement (91) ; et
un engrenage entraîné (37) qui engrène et tourne avec l'engrenage d'entraînement (36) ;
la seconde unité (33) forme la chambre de pompe (100) ensemble avec la première unité (32) en étant raccordée de manière amovible à la première unité (32) ; et
la pompe à engrenages peut être exposée pour son nettoyage ou son remplacement en retirant uniquement la seconde unité (33) de la première unité (32).

2. Dispositif d'alimentation en adhésif (31) selon la revendication 1, dans lequel une direction suivant laquelle la première unité (32) peut être raccordée à la partie de support de source d'entraînement (13) est la même que la direction suivant laquelle la seconde unité (33) peut être raccordée à la première unité (32).

3. Dispositif d'alimentation en adhésif (31) selon la revendication 1 ou 2, dans lequel la seconde unité (33) comporte un dispositif de chauffage (103, 104) adapté de manière à chauffer l'adhésif.

4. Dispositif d'alimentation en adhésif (31) selon l'une quelconque des revendications 1 à 3, dans lequel la seconde unité (33) comporte l'injecteur (45) qui est raccordé au canal (72, 73).
